# EUROPÄISCHE PATENTSCHRIFT

(11) **EP 2 153 977 B1**
(45) Veröffentlichungstag und Bekanntmachung des Hinweises auf die Patenterteilung: **30.03.2016**
(21) Anmeldenummer: 09009948.2
(22) Anmeldetag: 31.07.2009
(51) Int. Cl.: B29C 65/10, F01M 13/04, B29C 44/02, B29C 65/72, B29C 65/58, B29L 22/00

(54) **Ventilhaube für Hubkolben-Verbrennungsmotor sowie Verfahren zu ihrer Herstellung**
Valve cover for reciprocating internal combustion engine and method of manufacture
Couvercle de soupape pour moteur à combustion interne et la méthode de fabrication

(30) Priorität: 11.08.2008 DE 102008038018; 11.08.2008 DE 102008038020
(43) Veröffentlichungstag der Anmeldung: 17.02.2010
(73) Patentinhaber: ElringKlinger AG, 72581 Dettingen (DE)
(72) Erfinder: Gruhler, Tobias, 72793 Pfullingen (DE); Bendl, Klaus, 75038 Oberderdingen (DE); Gorbach, Gabriele, Dr., 72766 Reutlingen (DE); Haas, Thomas, 72581 Dettingen (DE)
(74) Vertreter: Hoeger, Stellrecht & Partner Patentanwälte mbB

(56) Entgegenhaltungen:
- EP-A1- 1 415 789
- DE-A1- 10 019 163
- DE-A1-102006 010 815
- JP-A- 7 186 263
- JP-A- 2001 026 056
- JP-A- 2008 025 371
- US-A- 5 028 327
- US-A1- 2003 111 765
- US-A1- 2005 252 714

## Beschreibung

Die Erfindung betrifft eine Ventilhaube für einen Hubkolben-Verbrennungsmotor, in welche eine Ölabscheidevorrichtung zum Abscheiden von Öltröpfchen aus Blow-by-Gasen des Verbrennungsmotors integriert ist und die sich einfach herstellen lässt, obwohl sie Mittel enthält, durch die verhindert wird, dass zumindest ein wesentlicher Teil der abgeschiedenen Öltröpfchen von den die Ventilhaube durchströmenden Blow-by-Gasen mitgerissen wird. Sie besitzt mindestens zwei längs mindestens einer ersten Schweißnaht miteinander verschweißte thermoplastische Kunststoffteile, wobei die zwei Kunststoffteile mit von jeweils einem Wandbereich der beiden Kunststoffteile gebildeten Fügeflächen gegeneinander anliegen und die erste Schweißnaht in diesen Fügeflächen liegt.

Ferner betrifft die Erfindung ein Verfahren zum Herstellen einer solchen Ventilhaube.

Die ElringKlinger AG stellt als Ventilhauben gestaltete Baugruppen der eingangs erwähnten Art her, bei denen die miteinander zu verbindenden thermoplastischen Kunststoffteile aus gegebenenfalls faserverstärktem Polyamid durch Reibschweißen miteinander verbunden wurden. Mit Hilfe des Reibschweißens lassen sich zwar zwei thermoplastische Kunststoffteile in einem Schritt längs einer durch das Reibschweißen erzeugten und insbesondere endlosen, das heißt geschlossenen Schweißnaht miteinander verbinden, jedoch bringt das Reibschweißen auch einige Probleme mit sich: In der sogenannten Kaltreibphase, das heißt vor dem Aufschmelzen des Kunststoffs während des Reibschweißens, entsteht feinteiliger Abrieb, durch den die Kunststoffteile verschmutzt werden, und verschmutzte Baugruppen werden von den Fahrzeugherstellern nicht akzeptiert, insbesondere dann, wenn es sich um an Motoren zu montierende Baugruppen handelt. Ferner müssen für das Reibschweißen alle miteinander zu verbindenden Kunststoffteile nicht nur exakt positioniert, sondern in ihren Positionen auch so fest fixiert werden, dass keines der Kunststoffteile während des Reibschweißvorgangs aus seiner Position bewegt werden kann; dies kann, wie sich aus dem Folgenden noch ergeben wird, dann problematisch sein, wenn drei Kunststoffteile in einem Schritt durch Reibschweißen miteinander verbunden werden sollen, nämlich dann, wenn in der fertigen Baugruppe eines der drei Kunststoffteile zwischen den beiden anderen angeordnet ist, von denen das eine durch Reibschweißen sowohl mit dem anderen als auch mit dem dazwischen liegenden Kunststoffteil verbunden wurde. Schließlich führt das Reibschweißen zu relativ breiten Schweißnähten und erfordert einen linearen Verlauf der Fügeflächen, längs welcher die Kunststoffteile durch Reibschweißen miteinander verbunden werden sollen.

Vergleichbare Probleme ergeben sich auch bei Baugruppen der eingangs erwähnten Art, bei denen mindestens eines von zwei durch Reibschweißen miteinander verbundenen thermoplastischen Kunststoffteilen aus Gründen der Material- und Gewichtseinsparung ein Schaumkunststoffteil ist. In diesem Fall kommt noch hinzu, dass in der Kaltreibphase die Wände von Gasbläschen des Schaumkunststoffs, welche den durch das Schweißen miteinander zu verbindenden Fügeflächen der beiden Kunststoffteile sehr nahe liegen, zerstört werden können und dann gleichfalls einen feinteiligen Abrieb bilden.

Aus der DE-10 2005 059 546-A1 ergibt sich eine Fluidfiltervorrichtung für Fahrzeuge, welche insbesondere als Ölfilter innerhalb eines Fahrzeug-Automatikgetriebes gestaltet ist. Diese bekannte Filtervorrichtung hat ein zweiteiliges Kunststoffgehäuse aus einer Gehäuseunterschale und einer Gehäuseoberschale, wobei diese beiden Schalen an ihren einander zugekehrten Rändern jeweils mit einem an der Gehäuseaußenseite umlaufenden Randflansch versehen sind. Damit die beiden Gehäuseschalen im Bereich ihrer von den Randflanschen gebildeten und gegeneinander anliegenden Fügeflächen mittels eines Lasers miteinander verschweißt werden können, bestehen beide Schalen aus einem thermoplastischen Kunststoff (insbesondere aus Nylon 6 oder 66) und ist der Randflansch der Gehäuseoberschale für das Schweißlaserlicht hinreichend durchlässig; zu diesem Zweck ist der Kunststoff der Gehäuseoberschale nicht pigmentiert, während der Kunststoff der Gehäuseunterschale mittels eines Pigments eingefärbt sein soll. Zwischen Gehäuseoberschale und -unterschale ist ein plattenförmiges Filterelement aus Polyesterharz-Fasern angeordnet, welches mit einem dünnwandigen Umfangsrandbereich zwischen dem Gehäuseinneren benachbarten Bereichen der beiden Randflansche angeordnet ist und an einer um das Gehäuseinnere umlaufenden Stufe in der Fügefläche des Randflansches der Gehäuseoberschale endet. Auch das Filterelement soll für das Schweißlaserlicht hinreichend durchlässig sein, um die folgenden Verbindungen herstellen zu können: Durch den für das Schweißlaserlicht hinreichend durchlässigen Randflansch der Gehäuseoberschale hindurch werden die Randflansche der beiden Gehäuseschalen im Bereich ihrer beiden gegeneinander anliegenden Fügeflächen miteinander verschweißt, und zwar (vom Gehäuseinneren her gesehen) außerhalb des äußeren Rands des Filterelements; ferner wird mit dem Schweißlaser durch den Randflansch der Gehäuseoberschale hindurch der thermoplastische Kunststoff des Randflanschs der Gehäuseunterschale aufgeschmolzen, und zwar in einem unter dem Umfangsrandbereich des Filterelements liegenden Bereich der Fügefläche der Gehäuseunterschale, so dass in diesem Bereich die Kunststoffschmelze in das Fasermaterial des Filterelements eindringt, um das Filterelement mit dem Randflansch der Gehäuseunterschale zu verkleben. Bei der Herstellung dieser bekannten Fluidfiltervorrichtung muss der Schweißlaser sowohl bei der Herstellung der die beiden Gehäuseschalen miteinander verbindenden Schweißnaht, als auch zur Herstellung der das Filterelement mit der Gehäuseunterschale verbindenden Klebenaht um das Gehäuse herum geführt werden, was verhältnismäßig lange Taktzeiten bei der Herstellung der Vorrichtung bedingt; außerdem werden sowohl aufeinanderfolgende Bereiche der Schweißnaht, als auch aufeinanderfolgende Bereiche der Klebenaht notwendigerweise zeitlich nacheinander erzeugt, so dass die Bewegungsgeschwindigkeit des Schweißlasers um das Gehäuse herum exakt eingehalten werden muss, um gewährleisten zu können, dass die Schweißverbindung zwischen den beiden Gehäuseschalen dauerhaft hinreichend fest, aber auch fluiddicht ist. Ein weiterer Nachteil der bekannten Fluidfiltervorrichtung ist in Folgendem zu sehen: Der Kunststoff von an einem Verbrennungsmotor oder in dessen unmittelbarer Nachbarschaft verbauten Baugruppen mit Kunststoffteilen wird üblicherweise dunkel (fast schwarz) eingefärbt, und zwar mit Pigmenten, wie Russpartikeln, da sich sonst derartige Kunststoffteile im Motorbetrieb unter dem Einfluss der an einem Verbrennungsmotor und in dessen unmittelbarer Nachbarschaft herrschenden, verhältnismäßig hohen Temperaturen verfärben und unansehnlich werden.

Aus der JP 2008-25371 A ist eine Ventilhaube für einen Hubkolben-Verbrennungsmotor bekannt, die einen sehr komplizierten Aufbau aufweist.

Der Erfindung lag die Aufgabe zugrunde, eine Ventilhaube für einen Hubkolben-Verbrennungsmotor der eingangs erwähnten Art vorzuschlagen, welche die vorstehend erwähnten Nachteile der sich aus der DE-10 2005 059 546-A1 ergebenden Fluidfiltervorrichtung und der sich aus der JP 2008-25371 A ergebenden Ventilhauben nicht aufweist und dennoch eine Schweißnaht bzw. Schweißnähte von dauerhaft guter Qualität besitzt. Ferner lag der Erfindung die Aufgabe zugrunde, ein Verfahren zur Herstellung einer solchen Baugruppe zu entwickeln, welches sich einfach und kostengünstig mit verhältnismäßiger kurzer Taktzeit durchführen lässt.

Zur Lösung der die Ventilhaube betreffenden Aufgabe wird erfindungsgemäß vorgeschlagen, diese so zu gestalten, dass die die Fügeflächen überdeckenden Wandbereiche der beiden Kunststoffteile, vorzugsweise die ganzen Kunststoffteile, aus einem für Schweißlaserlicht zumindest im Wesentlichen undurchlässigen Werkstoff bestehen und zum Verschweißen mindestens ein erstes der beiden Kunststoffteile (und insbesondere beide Kunststoffteile) längs der ersten Schweißnaht mittels eines heißen Gases aufgeschmolzen wurde. An dieser Stelle sei darauf hingewiesen, dass sich der Einsatz des sogenannten Heißgasschweißens an der Struktur der Schweißnaht bzw. der durch Schweißen miteinander verbundenen Bereiche der Fügeflächen der Kunststoffteile erkennen lässt und infolgedessen nicht nur ein Verfahrensmerkmal darstellt sondern auch zu einem Merkmal der Baugruppe führt, nämlich zu der vorstehend erwähnten besonderen Struktur.

Das sogenannte Heißgas-Schweißen ist für das Verbinden thermoplastischer Kunststoffteile an sich bekannt (siehe z.B. die DE-100 19 300-B4 und die EP-1 415 789-B1). Dabei wird ein heißes Gas, welches gegenüber der Kunststoffschmelze inert ist, aus einer, vorzugsweise aber aus einer Vielzahl von Düsen auf gegen der zu erzeugenden Schweißnaht entsprechende Bereiche der miteinander zu verschweißenden Kunststoffteile gerichtet und damit in diesen Bereichen der Kunststoff aufgeschmolzen, worauf die Kunststoffteile zur Bildung der Schweißnaht gegeneinander gepresst werden.

Der Kunststoff aller miteinander verschweißten Kunststoffteile einer erfindungsgemäßen Ventilhaube kann, wie üblich und vorstehend geschildert, mittels Pigmenten dunkel eingefärbt werden, dies gilt insbesondere für die die Fügeflächen überdeckenden Wandbereiche der beiden Kunststoffteile, welche für Schweißlaserlicht zumindest im Wesentlichen undurchlässig sein können. Außerdem ermöglicht es das Heißgas-Schweißen prinzipiell, schmale Schweißnähte und Schweißnähte mit beliebigem geometrischen Verlauf zu erzeugen und alle später miteinander verschweißten Bereiche der Fügeflächen überall gleichzeitig hinreichend aufzuschmelzen, so dass sich kurze Taktzeiten erreichen lassen.

Bei bevorzugten Ausführungsformen der erfindungsgemäßen Ventilhaube liegt die erste Schweißnaht ausschließlich in den Fügeflächen, insbesondere so innerhalb der Fügeflächen, dass sich die Schweißnaht nicht bis zu einem Rand einer oder beider der Fügeflächen erstreckt. Bei solchen Ausführungsformen ist dann die erfindungsgemäße Baugruppe an ihrer Peripherie frei von aufgeschmolzenem und wieder erstarrtem Kunststoff, so dass sie an ihrer Peripherie eine einwandfreie und gegebenenfalls glatte Oberfläche besitzt.

Als Kunststoff bzw. Kunststoffe für die Kunststoffteile werden bevorzugt solche Materialien verwendet, die bis mindestens 130°C und vorzugsweise bis mindestens ca. 150°C temperaturbeständig sind.

Besonders vorteilhaft ist es, wenn bei mindestens einem der Kunststoffteile und vorzugsweise bei allen Kunststoffteilen der erfindungsgemäßen Baugruppe der thermoplastische Kunststoff ein Polyamid oder PEEK ist, wobei der Kunststoff vorzugsweise pigmentiert, d.h. eingefärbt ist.

Bei bevorzugten Ausführungsformen der erfindungsgemäßen Ventilhaube ist mindestens eines der beiden miteinander verschweißten thermoplastischen Kunststoffteile ein Schaumkunststoffteil mit Gasbläschen, welche mit einem gegenüber dem geschmolzenen Kunststoff dieses Kunststoffteils inerten Gas gefüllt sind, und besonders vorteilhaft ist es, wenn es sich bei beiden der zwei miteinander verschweißten Kunststoffteile um derartige Schaumkunststoffteile handelt. Dadurch lassen sich Materialkosten und Gewicht der Ventilhaube minimieren, wobei die Kosteneinsparung dann besonders groß ist, wenn es sich bei dem Schaumkunststoff bzw. den Schaumkunststoffen um Polyamide und/oder PEEK handelt, das heißt um Kunststoffe, die zwar recht temperaturbeständig, aber auch verhältnismäßig teuer sind.

Der Erfolg des Heißgas-Schweißens bei einer erfindungsgemäßen Ventilhaube ist überraschend, weil zunächst zu vermuten war, dass das in Fügeflächen-nahen Gasbläschen enthaltene Gas zu Einbußen in der Qualität der Schweißverbindung führen würde und dass die Erhitzung der Gasbläschen im Zuge des Heißgas-Schweißen zum Abplatzen von Wandbereichen solcher Gasbläschen führen würde, welche den miteinander zu verschweißenden Fügeflächenbereichen der Kunststoffteile sehr naheliegen, und dass diese abgeplatzten Wandbereiche die Qualität der Schweißverbindung beeinträchtigen würden. Dies ist aber überraschenderweise nicht der Fall, was derzeit dadurch erklärt wird, dass beim Erhitzen die Fügeflächen-nahen Gasbläschen zerstört werden und das Gas dann entweicht, und dass dabei gebildete Wandpartikel der zerstörten Gasbläschen, selbst wenn sie beim Erhitzen nicht erweicht werden, im Zuge des Aufschmelzens des Kunststoffs der Kunststoffteile in der Kunststoffschmelze aufgehen, so dass sich auch eine fluiddichte Schweißnaht herstellen lässt.
Weil die Gasbläschen des Schaumkunststoffteils bzw. der Schaumkunststoffteile mit einem gegenüber dem geschmolzenen Kunststoff inerten Gas, wie z.B. CO₂ oder Stickstoff, gefüllt sind, und weil sich für das Heißgas-Schweißen ein ebenso inertes Gas verwenden lässt, führt die Erfindung auch nicht zu einer Beeinträchtigung der Qualität der Schweißnaht durch Oxidationsprodukte oder andere Reaktionsprodukte des aufgeschmolzenen Kunststoffs.
Besonders empfehlenswert sind Ausführungsformen der erfindungsgemäßen Ventilhaube, bei denen die Gasbläschen eine Zellengröße (Durchmesse) von maximal ungefähr 150 µm aufweisen, und insbesondere liegt die Zellengröße zumindest nahezu aller Gasbläschen in einem Bereich von ungefähr 5 µm bis ungefähr 100 µm (was sich beim heutigen Stand des im Folgenden noch zu erläuternden sogenannten physikalischen Schäumens von Kunststoffen ohne Weiteres bewerkstelligen lässt).
Da vor allem bei Fahrzeug-Modulen erhebliche Anforderungen an die Steifigkeit und Festigkeit der Kunststoffteile gestellt werden, wird für bevorzugte Ausführungsformen der erfindungsgemäßen Ventilhaube empfohlen, mindestens eines der Kunststoffteile als faserverstärktes Teil zu gestalten. Damit die Verstärkungsfasern eine möglichst große Homogenität des Schaumkunststoffteils bzw. der Schaumkunststoffteile und der Größe sowie der Verteilung der Gasbläschen erlauben, aber auch das im Folgenden noch zu beschreibende physikalische Schäumen, werden Verstärkungsfasern empfohlen, deren Länge im Mittel einige Zehntel Millimeter beträgt.
Mikrozelluläre Schaumkunststoffe lassen sich durch chemisches oder physikalisches Schäumen einer Polymerschmelze herstellen. Für die vorliegende Erfindung wird jedoch das physikalische Schäumen bevorzugt, und zwar insbesondere in einer Ausführungsform, welche unter der Bezeichnung MuCell bekannt geworden ist (bei dem Begriff MuCell handelt es sich um eine Marke der Firma Trexel Inc., Woburn, Massachusetts, USA). Bei dem MuCell-Verfahren wird in einem Mischschneckenextruder das zu schäumende thermoplastische Material plastifiziert und in der Schmelze ein "Gas" in Form einer dem Extruder unter hohem Druck zugeführten superkritischen Flüssigkeit fein dispergiert; dabei löst sich das "Gas", dessen Temperatur über seiner kritischen Temperatur liegt und das als superkritische Flüssigkeit vorliegt, in der Kunststoffschmelze. Wird diese dann in die Spritzgussform eingespritzt, tritt das Gas infolge des beim Einspritzen erfolgenden Druckabfalls aus der Polymerschmelze heraus und bildet in der Kunststoffschmelze eine weitgehend homogene Schaumstruktur mit sehr kleinen Poren (Gasbläschen), deren Zellengröße im Bereich von ungefähr 5 bis ungefähr 150 µm liegt. Durch die Expansionskraft des Gases wird die Kunststoffschmelze während des Abkühlprozesses auch unter ausreichend hohem Druck gegen die Wand des Spritzgusswerkzeuges gedrückt, damit das fertige Kunststoffteil die Werkzeugwand gut abbildet - die Expansionskraft des Gases wirkt auch zumindest nahezu gleichmäßig in allen Bereichen des Formhohlraums des Spritzgusswerkzeugs. Das MuCell-Verfahren wird zum Beispiel in der WO 92/17533 beschrieben, und die WO 02/26482 beschreibt das MuCell-Verfahren im Zusammenhang mit der Herstellung faserverstärkter Kunststoffteile.

Eine besonders vorteilhafte erfindungsgemäße Ventilhaube zeichnet sich also dadurch aus, dass mindestens eines der miteinander zu verschweißenden Kunststoffteile ein durch Spritzgießen und gleichzeitiges physikalisches Schäumen einer Kunststoffschmelze erzeugtes Spritzgussteil ist. In diesem Zusammenhang sei bemerkt, dass sich das physikalische Schäumen zum Beispiel an der Homogenität der Schaumstruktur sowie der Art des in den Poren des Schaumkunststoffs enthaltenen Gases nachweisen lässt.

Im MuCell-Verfahren hergestellte Kunststoffteile erfindungsgemäßer Ventilhauben zeichnen sich auch dadurch aus, dass sie zumindest nahezu keine sogenannten Einfallstellen aufweisen, welche dadurch entstehen, dass beim Abkühlen der Kunststoffschmelze im Spritzgusswerkzeug sich der Kunststoff von der Wand des Formhohlraums des Spritzgusswerkzeugs zurückzieht; außerdem weisen diese Kunststoffteile keine nennenswerten Verzüge auf, welche sonst bei spritzgegossenen Kunststoffteilen zu beobachten sind und das Erzeugen qualitativ guter Schweißverbindungen zumindest erschweren. Diese Vorteile sind nicht nur auf die vorstehend erwähnte Expansionskraft des Gases zurückzuführen, sondern auch darauf, dass durch das in der Kunststoffschmelze als superkritisches Fluid gelöste Gas die Fließfähigkeit der Kunststoffschmelze außerordentlich verbessert wird.

Die Ventilhaube weist zwei von den beiden miteinander verschweißten thermoplastischen Kunststoffteilen gebildete Außenteile sowie ein zwischen diesen angeordnetes Zwischenteil auf und zeichnet sich erfindungsgemäß dadurch aus, dass das Zwischenteil auf einem ersten der beiden Außenteile aufliegt und an seinem Umfangsrandbereich mit einer dem zweiten Außenteil zugewandten ersten Fügefläche an eine zweite Fügefläche des zweiten Außenteils angrenzt, dass eine am ersten Außenteil vorgesehene und dem zweiten Außenteil zugewandte dritte Fügefläche an eine vierte Fügefläche des zweiten Außenteils angrenzt, dass in einer Draufsicht auf die Ventilhaube die dritte sowie die vierte Fügefläche die erste sowie die zweite Fügefläche umschließen und dass die beiden Außenteile längs der dritten und vierten Fügefläche miteinander verschweißt sind.
Grundsätzlich ist es möglich, das Zwischenteil zwischen den beiden miteinander verschweißten Außenteilen nur einzuklemmen, bevorzugt wird aber eine Ausführungsform, bei der das Zwischenteil und eines der Außenteile durch eine zweite Heißgas-Schweißnaht miteinander verbunden sind, vorzugsweise das Zwischenteil und das zweite Außenteil, so dass dann die zweite Heißgas-Schweißnaht in der ersten und der zweiten Fügefläche liegt.

Wurden die Kunststoffteile über die ganzen Fügeflächen aufgeschmolzen, was nicht bevorzugt wird, sind die Fügeflächen in der fertigen Ventilhaube natürlich nicht mehr als Grenzflächen erkennbar.

Vorteilhafterweise liegen bei einer erfindungsgemäßen Ventilhaube alle Schweißnähte ausschließlich in den Fügeflächen, und zwar insbesondere innerhalb der Fügeflächen.

Die vorstehend beschriebene erfindungsgemäße Ventilhaube mit zwei Außenteilen und einem Zwischenteil lässt sich besonders kostensparend herstellen, weil nach dem Auflegen des Zwischenteils auf das erste Außenteil sich die beiden Schweißnähte, längs der die erste und die zweite Fügefläche bzw. die dritte und die vierte Fügefläche miteinander verbunden sind, gleichzeitig durch Heißgas-Schweißen herstellen lassen, indem nach dem Aufschmelzen des Kunststoffs in den Bereichen der beiden zu erzeugenden Schweißnähte das zweite Außenteil mit seinen Fügeflächen sofort gegen die Fügeflächen des Zwischenteils und des ersten Außenteils angepresst wird.

Bei bevorzugten Ausführungsformen der erfindungsgemäßen Ventilhaube liegen die erste sowie die zweite Fügefläche in einer ersten Ebene und die dritte sowie die vierte Fügefläche in einer zweiten Ebene, welche gegenüber der ersten Ebene in Richtung senkrecht zu dieser Ebene versetzt ist. Dadurch lassen sich vor allem Fertigungstoleranzen der verschiedenen Teile leichter beherrschen.

Bei Ausführungsformen der erfindungsgemäßen Ventilhaube sind die beiden Außenteile längs einer in der dritten und vierten Fügefläche liegenden endlosen Schweißnaht gasdicht miteinander verbunden, was sich dadurch bewerkstelligen lässt, dass die beiden Außenteile in der dritten und vierten Fügefläche durch das Heißgas aufgeschmolzen und dann sofort gegeneinander gepresst werden. Je nach Konstruktion und Verwendungszweck der erfindungsgemäßen Ventilhaube können aber auch alternativ oder zusätzlich das Zwischenteil und das zweite Außenteil längs einer in der ersten und zweiten Fügefläche liegenden endlosen Schweißnaht gasdicht miteinander verbunden sein. Dies ist besonders dann empfehlenswert, wenn das zweite Außenteil zusammen mit dem Zwischenteil mindestens einen Hohlraum bildet, welcher im Betrieb der Ventilhaube gasdicht sein soll. Umschließen die beiden Außenteile gemeinsam mindestens einen Hohlraum, welcher im Betrieb der Ventilhaube gasdicht sein soll, liegt dieser bei Ausführungsformen in einer Draufsicht auf die Ventilhaube innerhalb der dritten und vierten Fügefläche.

Bilden erstes Außenteil und Zwischenteil zusammen mindestens einen von diesen beiden Teilen umschlossenen Hohlraum, welcher im Betrieb der Ventilhaube gasdicht sein soll, werden Ausführungsformen bevorzugt, bei denen die Peripherie des Zwischenteils diesem Hohlraum benachbart ist und in einer Draufsicht auf die Ventilhaube die dritte und vierte Fügefläche zwischen einer Peripherie mindestens eines der Außenteile und der ersten sowie der zweiten Fügefläche angeordnet sind.

Weitere Ausführungsformen der erfindungsgemäßen Ventilhaube zeichnen sich also dadurch aus, dass die Peripherie des Zwischenteils mindestens einem von dem ersten Außenteil zusammen mit dem Zwischenteil gebildeten Hohlraum benachbart ist und dass in einer Draufsicht auf die Ventilhaube die dritte sowie die vierte Fügefläche zwischen einer Peripherie eines der Außenteile und der ersten sowie der zweiten Fügefläche angeordnet sind.

Es ist auch vorteilhaft, wenn das zweite Außenteil zusammen mit dem Zwischenteil und/oder dem ersten Außenteil mindestens einen Hohlraum bildet, welcher in einer Draufsicht auf die Ventilhaube innerhalb der dritten sowie der vierten Fügefläche liegt.

Das Zwischenteil ist ungefähr plattenartig und deshalb besonders einfach gestaltet; ferner empfiehlt es sich dann, das erste Außenteil als schalenartiges Unterteil und das zweite Außenteil als ungefähr haubenartiges Oberteil der Ventilhaube auszubilden.

Im Hinblick auf die vorstehend erwähnten Vorteile der Verwendung eines Schaumkunststoffs sowie des Anwendens des Heißgas-Schweißens werden Ausführungsformen der erfindungsgemäßen Ventilhaube bevorzugt, bei denen zwei miteinander verschweißte Kunststoffteile Schaumkunststoffteile sind. Bei einer Baugruppe mit zwei Außenteilen und einem Zwischenteil handelt es sich vorteilhafterweise bei den beiden Außenteilen um Schaumkunststoffteile, da sich dadurch der Materialeinsatz und das Gesamtgewicht der Baugruppe optimieren lassen. Da das Zwischenteil im Allgemeinen ein geringeres Volumen haben wird, wird hingegen empfohlen, dieses als ungeschäumtes Kunststoffteil zu gestalten, weil es sich dann mit einem geringeren Verfahrensaufwand herstellen lässt als ein geschäumtes Zwischenteil.

Die Ventilhaube für einen Hubkolben-Verbrennungsmotor weist eine integrierte Ölabscheidevorrichtung zum Abscheiden von Öltröpfchen aus Blow-by-Gasen auf und bildet eine vom Blow-by-Gas durchströmte Kammer mit einem Gaseinlass und einem Gasauslass, in welcher die Abscheidevorrichtung angeordnet ist, und eine solche erfindungsgemäße Ventilhaube zeichnet sich vorteilhafterweise dadurch aus, dass in die Kammer mindestens eine von der Gasströmung quer angeströmte Prallwand zum Abscheiden von Öltröpfchen aus der Gasströmung und/oder zum Ableiten von abgeschiedenem Öl aus der Gasströmung hineinragt, dass die Kammer einen Boden aufweist, welcher mindestens im Bereich der Abscheidevorrichtung bis auf wenigstens eine Ölablauföffnung geschlossen ist und dass die Ventilhaube unter dem Boden mindestens eine durch den Boden abgedeckte, mit einem Wannenboden versehene Ölauffangwanne für das abgeschiedene Öl aufweist, welche über die Ölablauföffnung mit der Kammer kommuniziert. Bei einer solchen Ventilhaube wird der Kammerboden von dem Zwischenteil der vorstehend geschilderten Baugruppe gebildet, ferner verläuft der Kammerboden mindestens im Bereich der Abscheidevorrichtung vorzugsweise ungefähr horizontal oder ist gegenüber der Horizontalen um einen spitzen Winkel geneigt. Sind in der Kammer mehrere, in Richtung der Gasströmung im Abstand voneinander befindliche und von der Gasströmung quer angeströmte Prallwände angeordnet, wie dies von Vorteil ist, empfiehlt es sich, jeder der Prallwände eine Ölablauföffnung des Kammerbodens zuzuordnen.
Wie bereits erwähnt, betrifft die Erfindung auch ein Verfahren zum Herstellen einer Ventilhaube mit mindestens zwei längs mindestens einer ersten Schweißnaht miteinander verschweißten thermoplastischen Kunststoffteilen, wobei die zwei Kunststoffteile in der Ventilhaube mit Fügeflächen gegeneinander anliegen und die Schweißnaht in diesen Fügeflächen liegt. Erfindungsgemäß wird ein solches Verfahren so gestaltet, dass an mindestens einem der Kunststoffteile in einem der zu erzeugenden Schweißnaht entsprechenden Bereich der Kunststoff durch wenigstens einen Strahl eines heißen inerten Gases aufgeschmolzen wird, worauf die Kunststoffteile zur Bildung der Schweißnaht gegeneinander gepresst werden. Dadurch ergeben sich die bereits vorstehend aufgeführten Vorteile.
Es ist empfehlenswert, an beiden miteinander zu verschweißenden Kunststoffteilen in der zu erzeugenden Schweißnaht entsprechenden Bereichen den Kunststoff aufzuschmelzen, ehe die beiden Teile gegeneinander gepresst werden.
Ferner wird empfohlen, mindestens ein erstes der Kunststoffteile durch Spritzgießen und gleichzeitiges physikalisches Schäumen einer Kunststoffschmelze zu erzeugen, um eine möglichst leichtgewichtige und formgetreue Ventilhaube herzustellen.

Beim Heißgas-Schweißen könnte der Heißgas-Strahl mittels einer Schlitzdüse erzeugt werden, wenn die Schlitzform der Kontur der zu erzeugenden Schweißnaht angepasst ist. Bevorzugt werden jedoch Ausführungsformen des erfindungsgemäßen Verfahrens, bei denen der der zu erzeugenden Schweißnaht entsprechende und aufzuschmelzende Bereich des Kunststoffteils mittels einer Gruppe von feinen Heißgasdüsen erhitzt wird, welche entsprechend der Form der Schweißnaht angeordnet sind. Dies wird vor allem dann bevorzugt, wenn die zu erzeugende Schweißnaht nicht in einer Ebene verläuft, da dann die Länge der insbesondere Hohlnadel-artigen Heißgasdüsen dem räumlichen Verlauf der zu erzeugenden Schweißnaht ohne weiteres angepasst werden kann.
In diesem Zusammenhang sei darauf hingewiesen, dass sich im MuCell-Verfahren hergestellte Kunststoffteile für das Heißgas-Schweißen besonders gut eignen, weil diese Kunststoffteile zumindest nahezu keine Verzüge aufweisen, so dass die Austrittsöffnung der Heißgasdüse bzw. die Austrittsöffnungen der Heißgasdüsen in einer Serienfertigung mit hoher Wiederholgenauigkeit in einem vorgegebenen kleinen Abstand von den aufzuschmelzenden Bereichen des Kunststoffteils bzw. der Kunststoffteile positioniert werden kann bzw. können, was für die Qualität der zu erzeugenden Schweißnaht von großer Bedeutung ist.
Ein Heißgas-Düsen aufweisendes Werkzeug lässt sich auch ohne wesentlichen Mehraufwand so gestalten, dass sich mit ihm an beiden miteinander zu verschweißenden Kunststoffteilen in der zu erzeugenden Schweißnaht entsprechenden Bereichen der Kunststoff überall gleichzeitig aufschmelzen lässt; hierzu bedarf es nur eines Werkzeugs, welches mehrere Heißgasdüsengruppen aufweist, mit denen sich die der zu erzeugenden Schweißnaht entsprechenden Bereiche der beiden Kunststoffteile gleichzeitig erhitzen lassen.
Liegen die miteinander zu verschweißenden Kunststoffteile längs Fügeflächen gegeneinander an, so wird die Schweißnaht vorzugsweise ausschließlich in diesen Fügeflächen erzeugt.

Bei einer erfindungsgemäßen Ventilhaube mit zwei Außenteilen und einem Zwischenteil, wie sie vorstehend beschrieben wurde, lässt sich das Herstellverfahren noch dadurch vereinfachen und mit hoher Wiederholgenauigkeit durchführen, dass das Zwischenteil am ersten Außenteil mechanisch vorfixiert wird, insbesondere mittels einer Clips-Verbindung, ehe das Zwischenteil mit dem zweiten Außenteil bzw. das zweite Außenteil mit dem ersten Außenteil und dem Zwischenteil verschweißt wird. Auf diese Weise lässt sich einfach gewährleisten, dass das Zwischenteil sowohl beim Aufschmelzen des Kunststoffs, als auch bei der Herstellung der Schweißnaht bzw. der Schweißnähte eine gewünschte Position am ersten Außenteil und damit gegenüber den beiden Außenteilen der fertigen Ventilhaube einnimmt.

Bevorzugte Ausführungsformen des erfindungsgemäßen Verfahrens zeichnen sich also dadurch aus, dass eine in der ersten und zweiten Fügefläche liegende Schweißnaht und eine in der dritten und vierten Fügefläche liegende Schweißnaht gleichzeitig gebildet werden. Ferner ist es dann vorteilhaft, wenn alle Schweißnähte ausschließlich in den Fügeflächen und vorzugsweise innerhalb der Fügeflächen erzeugt werden.

Weitere Merkmale, Vorteile und Einzelheiten der Erfindung ergeben sich aus der beigefügten zeichnerischen Darstellung sowie der nachfolgenden Beschreibung einer besonders vorteilhaften Ausführungsform der erfindungsgemäßen Ventilhaube und des Verfahrens sowie eines Schweißwerkzeugs zu ihrer Herstellung; in der Zeichnung zeigen:
- Figur 1: eine isometrische Darstellung dreier Hauptteile einer erfindungsgemäßen Ventilhaube, nämlich eines schalenartigen Unterteils, eines plattenartigen Zwischenteils und eines haubenartigen Oberteils, vor dem Zusammenfügen dieser drei Teile;
- Figur 2: eine Frontansicht des Zwischenteils;
- Figur 3: einen vertikalen Längsschnitt durch den gemäß Figur 1 rechten Bereich der Ventilhaube gemäß der Linie 3-3 in Figur 1;
- Figuren 4A und 4B: den in Figur 3 mit C bezeichneten Ausschnitt in größerem Maßstab, und zwar vor dem Zusammenfügen des Oberteils, des Zwischenteils und des Unterteils (Figur 4A) und nach dem Zusammenfügen der drei Teile (Figur 4B);
- Figur 5: einen vertikalen Schnitt durch periphere Randbereiche der zusammengefügten drei Teile zur Darstellung der Clips-Verbindung zwischen dem Unterteil und dem Zwischenteil;
- Figur 6: eine perspektivische Darstellung eines Werkzeugs zum Heißgas-Schweißen zwecks Verbindung des Oberteils mit dem Unterteil und dem Zwischenteil, und
- Figur 7: eine Seitenansicht dieses Werkzeugs gemäß Figur 6 von links gesehen.

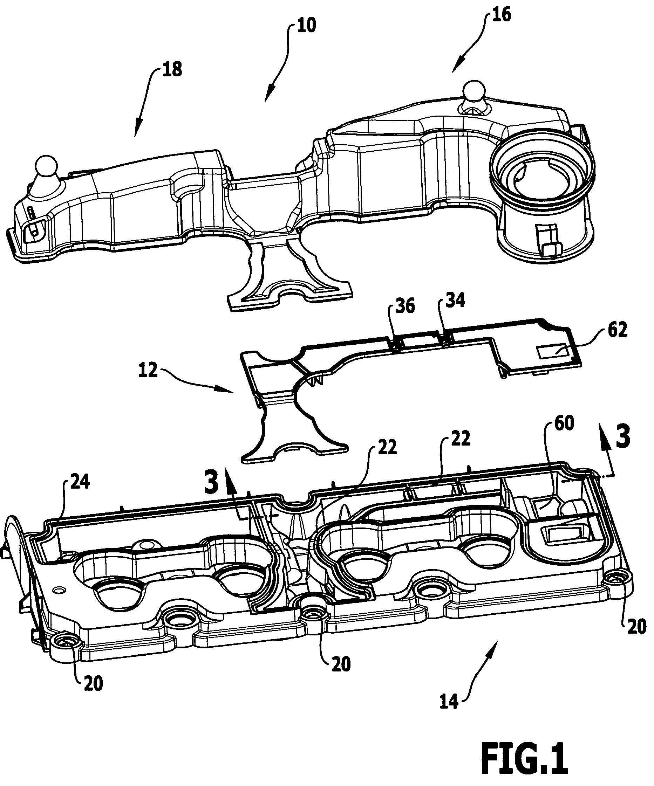

Die Figur 1 zeigt ein haubenartiges Oberteil 10, ein plattenartiges Zwischenteil 12 und ein schalenartiges Unterteil 14 einer Ventilhaube für einen Hubkolben-Verbrennungsmotor. Bei allen drei Teilen handelt es sich um Kunststoffteile aus einem Polyamid, wobei es sich bei dem Oberteil 10 und dem Unterteil 14 erfindungsgemäß um im MuCell-Verfahren hergestellte Spritzguss-Schaumkunststoffteile handeln soll, beim Zwischenteil 12 jedoch um ein ungeschäumtes Kunststoffteil. Ferner sind erfindungsgemäß insbesondere das Oberteil 10 und das Unterteil 14 faserverstärkte Kunststoffteile, wobei die Verstärkungsfasern, insbesondere Glasfasern, im Mittel einige Zehntel Millimeter lang sein sollen.

In die erfindungsgemäße Ventilhaube ist, wie später noch etwas näher erläutert werden soll, eine Vorrichtung zum Abscheiden von Motoröltröpfchen aus einem Gasstrom integriert, welcher aus dem Kurbelgehäuse des Motors in dessen Ansaugtrakt zurückgeführt wird; deshalb weist die Ventilhaube einen Ölabscheidebereich 16 auf; ferner bildet die Ventilhaube erfindungsgemäß einen Unterdruckspeicherbereich 18, wobei der Vollständigkeit halber erwähnt sei, dass an der Bildung des Ölabscheidebereichs 16 sowohl das Oberteil 10, als auch das Zwischenteil 12 und das Unterteil 14 beteiligt sind (zusammen mit weiteren, im Folgenden noch zu erwähnenden Bauteilen), während der Unterdruckspeicherbereich 18 nur vom Oberteil 10 und dem Unterteil 14 gebildet wird.

Das Unterteil 14 ist mit Schraubenlöchern 20 versehen, um die Ventilhaube am Zylinderkopf des Motors montieren zu können (unter Zwischenschaltung einer Dichtung).

In die Oberseite des Unterteils 14 ist eine rahmenförmige, ebene und horizontal verlaufende Auflage 22 für das Zwischenteil 12 eingeformt, deren Verlauf (in einer Draufsicht auf das Unterteil 14) an die Kontur der Peripherie des Zwischenteils 12 angepasst ist und die der Abstützung des auf das Unterteil 14 aufgelegten Zwischenteils 12 dient.

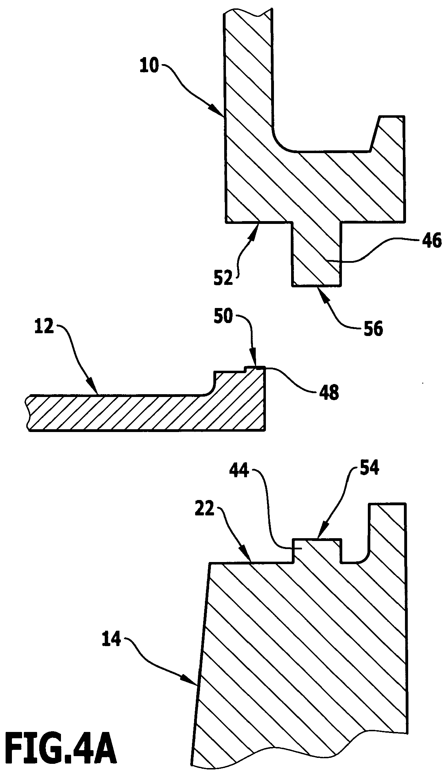

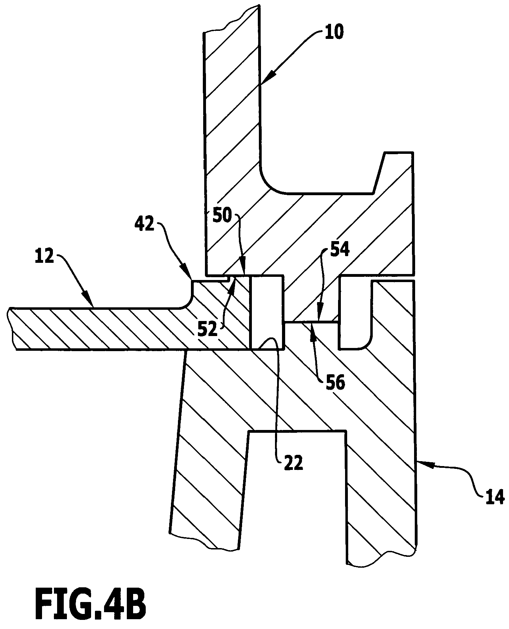

In gleicher Weise ist in die Oberseite des Unterteils 14 eine rahmenförmige und horizontal verlaufende Auflage 24 für das Oberteil 10 eingeformt. Bezüglich der Gestaltung der beiden Auflagen 22 und 24 wird auf die im Folgenden noch zu beschreibenden Figuren 4A und 4B verwiesen.

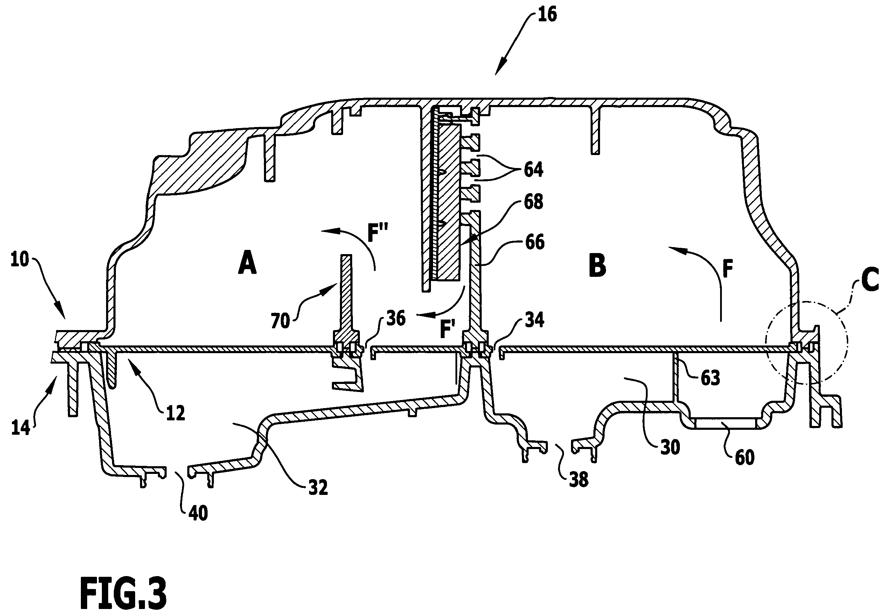

Die Figur 3 lässt die erfindungsgemäße Gestaltung des Ölabscheidebereichs 16 noch deutlicher erkennen, wobei die Figur 3 auch erfindungsgemäße Bauteile der Ventilhaube zeigt, welche in Figur 1 nicht dargestellt sind. Die Figur 3 zeigt den Ölabscheidebereich 16 der Ventilhaube in einem vertikalen Schnitt.

Im Ölabscheidebereich 16 sind in das insgesamt schalenartige Unterteil 14 zwei Ölauffangwannen 30 und 32 eingeformt, in welche aus dem vorstehend beschriebenen Gasstrom abgeschiedenes Motoröl abfließt, und zwar durch Ölablauföffnungen 34 und 36 des Zwischenteils 12 (siehe auch Figur 1). Um das abgeschiedene Motoröl in den Motoröl-Kreislauf des Motors zurückführen zu können, weisen die Ölauffangwannen 30 und 32 in ihren Böden Ablauföffnungen 38 und 40 auf.

Ehe auf die der Abscheidung von Öltröpfchen aus dem genannten Gasstrom dienenden Bauteile der erfindungsgemäßen Ventilhaube eingegangen wird, soll zunächst anhand der Figuren 3, 4A und 4B beschrieben werden, wie das Oberteil 10, das Zwischenteil 12 und das Unterteil 14 zusammengefügt und miteinander verschweißt sind.

Der in Figur 3 mit C bezeichnete und in den Figuren 4A und 4B in größerem Maßstab dargestellte Ausschnitt lässt die Auflage 22 des Unterteils 14 für einen Umfangsrandbereich 42 des Zwischenteils 12 erkennen; auf diese Auflage 22 wird das Zwischenteil 12 lagerichtig aufgelegt und durch später noch zu beschreibende Mittel am Unterteil 14 mechanisch fixiert. Außerhalb (in Richtung auf die Peripherie der Ventilhaube) des Umfangsrandbereichs 42 des Zwischenteils 12 weisen das Unterteil 14 und das Oberteil 10 vor dem Verschweißen der beiden Teile miteinander in Umfangsrichtung der Ventilhaube verlaufende und aufeinanderzu ausgerichtete Rippen 44 und 46 auf, an denen die beiden Außenteile miteinander verschweißt werden. Ferner weist der Umfangsrandbereich 42 des Zwischenteils 12 an seiner Oberseite gleichfalls eine sich entlang der Peripherie des Zwischenteils 12 erstreckende Rippe 48 auf, in deren Bereich das Oberteil 10 und das Zwischenteil 12 miteinander verschweißt werden; am Oberteil 10 kann aber auch noch eine der Rippe 48 entsprechende und auf diese zu ausgerichtete, in den Zeichnungen nicht dargestellte Rippe vorgesehen sein, so dass das Außenteil 10 und das Zwischenteil 12 an diesen beiden Rippen miteinander verschweißt werden können.

In den Figuren 4A und 4B sind die vier Fügeflächen, in denen das Oberteil 10 mit dem Unterteil 14 und das Zwischenteil 12 mit dem Oberteil 10 verschweißt werden bzw. sind, mit 50, 52, 54 und 56 bezeichnet. Eine erste Fügefläche 50 wird von der Oberseite der Rippe 48 gebildet, sie liegt einer zweiten Fügefläche 52 an der Unterseite des Oberteils 10 gegenüber. Eine dritte Fügefläche 54 wird von der Oberseite der Rippe 44 gebildet; sie liegt einer vierten Fügefläche 56 gegenüber, welche von der Unterseite der Rippe 46 gebildet wird. In den gegebenenfalls dann nicht mehr vorhandenen Grenz- oder Fügeflächen 50 und 52 liegt dann nach dem Verschweißen des Oberteils 10 mit dem Zwischenteil 12 eine erste Schweißnaht, und in den Fügeflächen 54 und 56 liegt nach dem Verschweißen des Oberteils 10 mit dem Unterteil 14 eine zweite Schweißnaht.

Vor dem Verschweißen der drei Teile 10, 12 und 14 miteinander weisen die Rippen 44, 46 und 48 sowie die gegebenenfalls am Oberteil 10 vorhandene, der Rippe 48 gegenüberliegende und vorstehend beschriebene Rippe in gemäß Figur 4A vertikaler Richtung erfindungsgemäß ein gewisses Übermaß auf (gegenüber dem in Figur 4B gezeigten Zustand nach dem Verschweißen der drei Teile miteinander), damit beim Heißgas-Schweißen nach dem Aufschmelzen des Kunststoffs in den Bereichen der vier Fügeflächen die drei Teile 10, 12 und 14 so gegeneinander gepresst werden können, dass sie in den in Figur 4B dargestellten Positionen relativ zueinander verbunden sind.

Der wesentliche Vorteil der in den Figuren 4A und 4B dargestellten Anordnung der vier Fügeflächen ist darin zu sehen, dass nach dem Auflegen und Vorfixieren des Zwischenteils 12 auf das und an dem Unterteil 14 der Kunststoff der drei Teile in den Bereichen der vier Fügeflächen gleichzeitig und in einem Schritt aufgeschmolzen werden kann, worauf dann das Oberteil 10 gegen das Zwischenteil 12 und das Unterteil 14 gepresst und so in einem einzigen Schritt sowohl mit dem Zwischenteil 12 als auch mit dem Unterteil 14 über Schweißverbindungen verbunden wird.

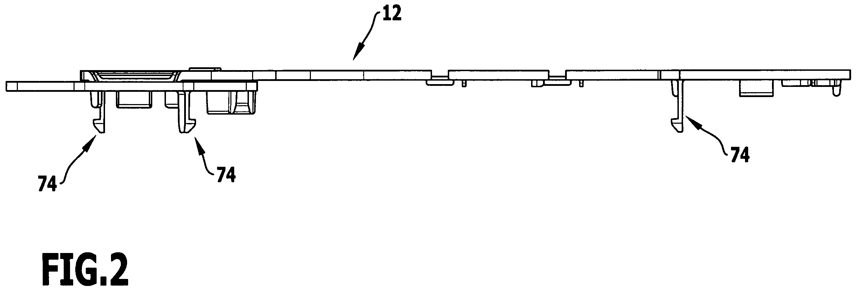

Der vorstehend beschriebene Gasstrom, in dem feine und feinste Öltröpfchen dispergiert sind und aus dem dieser Ölnebel in der erfindungsgemäßen Ventilhaube abgeschieden werden soll, tritt durch eine in den Figuren 1 und 2 dargestellte Einströmöffnung 60 im Boden des Unterteils 14 von unten in die Ventilhaube ein und strömt dann über eine Durchlassöffnung 62 (siehe gleichfalls die Figur 1) von unten in den Ölabscheidebereich 16 des Oberteils 10, was in Figur 3 mit dem Pfeil F angedeutet wurde. Damit der zu behandelnde Gasstrom nicht mit schon abgeschiedenem und in der Ölauffangwanne 30 befindlichem Öl in Berührung kommt, ist das Unterteil 14 mit einer Trennwand 63 versehen. Im weiteren Verlauf durchströmt der Gasstrom Düsenöffnungen 64 einer Wand 66, welche den vom Ölabscheidebereich 16 des Oberteils 10 und dem Zwischenteil 12 gebildeten Hohlraum der Ventilhaube in zwei Kammern A und B (siehe Figur 3) unterteilt. Die von den Düsenöffnungen 64 erzeugten Gasstrahlen treffen dann auf eine als Ganzes mit 68 bezeichnete Prallwand, welche sich vom Oberteil 10 nach unten in die Kammer A hineinerstreckt und an der die Gasströmung nach unten umgelenkt wird, so dass sie einen Spalt zwischen der Prallwand 68 und dem Zwischenteil 12 durchströmt, so wie dies in Figur 3 mit dem Pfeil F' angedeutet wurde. Anschließend trifft die Gasströmung auf eine Prallplatte 70, welche sich vom Zwischenteil 12 nach oben in die Kammer A hineinerstreckt und durch welche die Gasströmung nach oben umgelenkt wird, so dass sie über die Prallplatte 70 hinwegströmt, so wie dies in Figur 3 durch den Pfeil F" angedeutet wurde. Der Gasstrom verlässt dann die Kammer A durch eine in den Zeichnungen nicht dargestellte Öffnung im Ölabscheidebereich 16 des Oberteils 10.

An der Anströmseite der Wand 66 in der Kammer B abgeschiedene Öltröpfchen fließen an der Anströmseite der Wand 66 nach unten, und dieses abgeschiedene Öl fließt über die Ablauföffnung 34 in die Ölauffangwanne 30. An der Anströmseite der Prallwand 68 sowie gegebenenfalls an der Anströmseite der Prallplatte 70 in der Kammer A abgeschiedene Öltröpfchen tropfen bzw. fließen gleichfalls nach unten und gelangen dabei auf das Zwischenteil 12; dort anfallendes Öl fließt dann über die Ablauföffnung 36 in die Ölauffangwanne 32 ab. Die Prallplatte 70 dient aber hauptsächlich dem Zweck, durch die Prallwand 68 abgeschiedenes und auf den vom Zwischenteil 12 gebildeten Boden der Kammer gelangtes Öl daran zu hindern, vom Gasstrom mitgerissen zu werden, sondern es über die Ablauföffnung 36 ablaufen zu lassen.

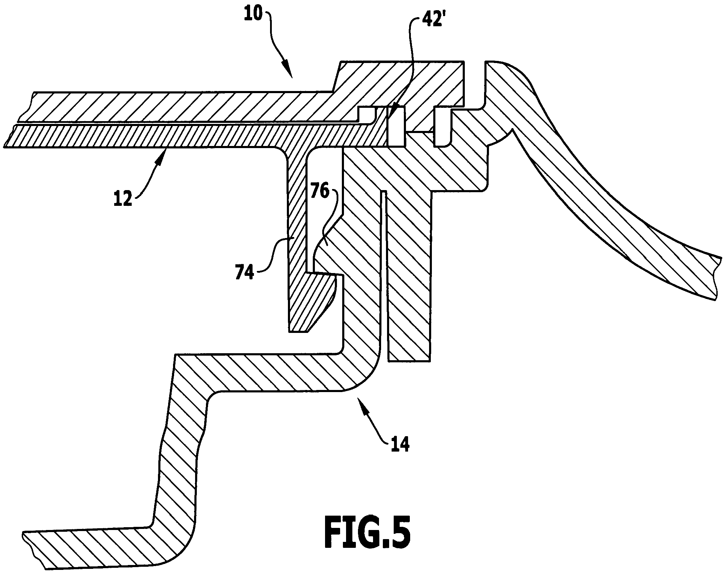

Anhand der Figuren 2 und 5 soll nun erläutert werden, wie das Zwischenteil 12 am Unterteil 14 vorfixiert wird, damit es beim Verschweißen des Oberteils 10 mit dem Zwischenteil 12 und dem Unterteil 14 lagerichtig auf dem Unterteil 14 positioniert ist. In diesem Zusammenhang sei erwähnt, dass die Figur 5 eine etwas anders gestaltete Peripherie des Zwischenteils 12 zeigt als die Figuren 3, 4A und 4B.

Nahe dem Umfangsrandbereich 42' des Zwischenteils 12 sind an dessen Unterseite zungenartige erste Rastelemente 74 angeformt, und zwar weist das Zwischenteil 12 längs seiner Peripherie mehrere solche im Abstand voneinander angeordnete Rastelemente 74 auf, deren untere freie Enden sich aus der in Figur 5 gezeigten Position elastisch nach links (gemäß Figur 5) auslenken lassen. An die Innenseite der Wand des Unterteils 14 sind wie Rastnasen gestaltete zweite Rastelemente 76 angeformt, und zwar in Positionen, welche den Positionen der Rastelemente 74 entsprechen, wenn das Zwischenteil 12 auf das Unterteil 14 aufgelegt ist. Da die Rastelemente 74 und 76 mit schrägen Aufgleitflächen versehen sind, rasten die Rastelemente 74 unter den Rastelementen 76 ein, wenn man das Zwischenteil 12 von oben auf das Unterteil 14 auflegt und nach unten drückt, so dass sich die vorstehend beschriebene Rast- oder Clips-Verbindung zwischen dem Zwischenteil 12 und dem Unterteil 14 ergibt.

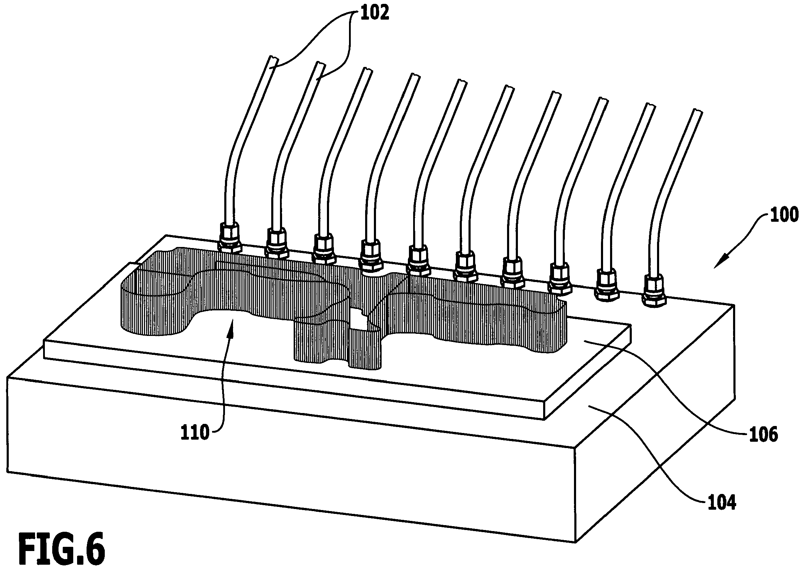

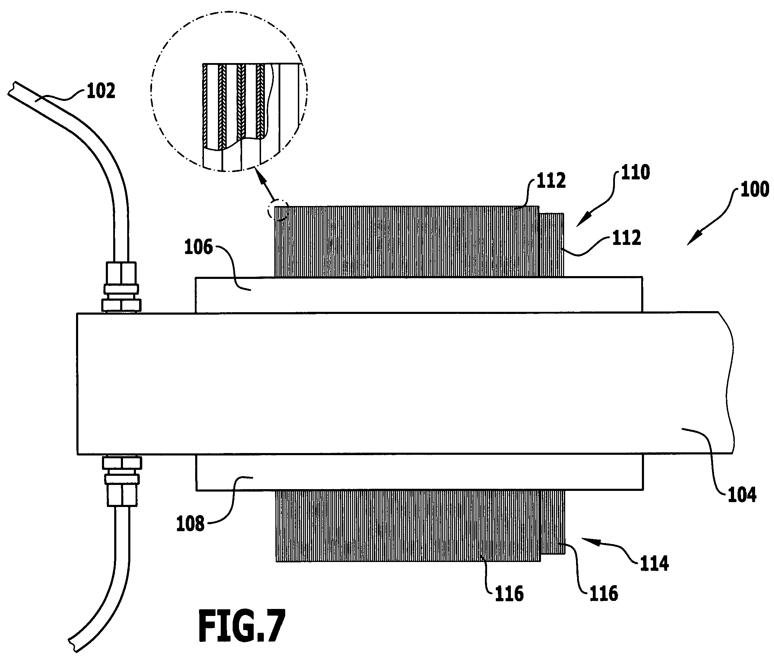

Anhand der Figuren 6 und 7 wird im Folgenden noch der grundsätzliche erfindungsgemäße Aufbau eines Werkzeugs zum Heißgas-Schweißen erläutert, mit dem sich in den miteinander zu verschweißenden Bereichen (Fügeflächen) des Oberteils 10, des Zwischenteils 12 und des Unterteils 14 der erfindungsgemäßen Ventilhaube der Kunststoff in einem Schritt und überall gleichzeitig aufschmelzen lässt, worauf das Oberteil 10 sofort gegen das Zwischenteil 12 und das Unterteil 14 angepresst und so mit diesen beiden Teilen verschweißt wird.

Das in den Figuren 6 und 7 dargestellte und als Ganzes mit 100 bezeichnete Werkzeug hat mehrere Druckgas-Anschlüsse 102 für die Zuführung eines gegenüber der Kunststoffschmelze inerten und unter Druck stehenden Gases, bei dem es sich insbesondere um Stickstoff handelt. Das Druckgas strömt in nicht dargestellter Weise in einen Wärmetauscher 104, der mindestens ein nicht dargestelltes elektrisches Heizelement enthält, mit dem das Druckgas beim Durchströmen des Wärmetauschers 104 erhitzt wird. An der Oberseite und der Unterseite des Wärmetauschers 104 befindet sich jeweils eine Düsenplatte 106 bzw. 108; die Düsenplatte 106 ist mit einer ersten Gruppe 110 von feinen, hohlnadelartigen Heißgasdüsen 112 versehen, die sich von der Düsenplatte 106 vertikal nach oben erstrecken und an ihren oberen Enden feine Austrittsöffnungen für das Heißgas aufweisen. In gleicher Weise ist die Düsenplatte 108 mit einer zweiten Gruppe 114 von feinen, hohlnadelartigen Heißgasdüsen 116 versehen, die sich von der Düsenplatte 108 vertikal nach unten erstrecken und an ihren unteren Enden feine Austrittsöffnungen für das Heißgas aufweisen. Die Heißgasdüsen werden aus dem Wärmetauscher 104 mit Heißgas gespeist.

Was der Einfachheit halber in den Figuren 6 und 7 nicht oder nur teilweise dargestellt wurde, sind die folgenden Merkmale des erfindungsgemäßen Werkzeugs:
Nachdem die ersten und zweiten Fügeflächen 50, 52 in einer anderen horizontalen Ebene liegen als die dritten und vierten Fügeflächen 54, 56, weist sowohl die ersten Düsengruppe 110, als auch die zweite Düsengruppe 114 jeweils zwei Untergruppen von Heißgasdüsen 112 bzw. 116 auf, wobei die Heißgasdüsen der einen Untergruppe länger als diejenigen der anderen Untergruppe sind bzw. die Düsenöffnungen der einen Untergruppe in einer anderen, gemäß Figur 7 horizontalen Ebene liegen als die Düsenöffnungen der anderen Untergruppe. Ferner sind erfindungsgemäß die Düsenöffnungen der einen Untergruppe der Gruppe 110 längs einer ersten Kurvenbahn angeordnet, die Düsenöffnungen der anderen Untergruppe der Gruppe 110 längs einer zweiten Kurvenbahn, die Düsenöffnungen der einen Untergruppe der Gruppe 114 längs einer dritten Kurvenbahn und die Düsenöffnungen der anderen Untergruppe der Gruppe 114 längs einer vierten Kurvenbahn, wobei der Verlauf der ersten Kurvenbahn dem Verlauf der zweiten Fügefläche 52, der Verlauf der zweiten Kurvenbahn dem Verlauf der vierten Fügefläche 56, der Verlauf der dritten Kurvenbahn dem Verlauf der ersten Fügefläche 50 und der Verlauf der vierten Kurvenbahn dem Verlauf der dritten Fügefläche 54 entspricht. Ferner liegen die Düsenöffnungen der Heißgasdüsen der vier Untergruppen in solchen Ebenen, dass sich das Werkzeug 100 bei vom Unterteil 14 und dem Zwischenteil 12 abgehobenem Oberteil 10 zwischen letzteres und das Unterteil 14 samt Zwischenteil 12 so einschieben und positionieren lässt, dass die Düsenöffnungen der verschiedenen Heißgasdüsen-Untergruppen von den den Untergruppen zugeordneten Fügeflächen alle denselben geringen Abstand aufweisen, welcher vorzugsweise in der Größenordung von 2 mm liegt. In diesem Zusammenhang wirkt es sich positiv aus, dass erfindungsgemäß nach dem MuCell-Verfahren hergestellte Ober- und Unterteile 10 bzw. 14 zumindest keine nennenswerten Verzüge aufweisen, so dass die zweite, dritte und vierte Fügefläche 52 bzw. 54 bzw. 56 eben sind und in gemäß der Figur 4B horizontalen Ebenen verlaufen.

Erfindungsgemäß haben die Düsenöffnungen der Heißgasdüsen 112, 116 Durchmesser in der Größenordnung von 1 mm, und für miteinander zu verschweißende Teile wird vorzugsweise ein Polyamid verwendet, dessen Schmelztemperatur bei ca. 270°C liegt; dann wird das zum Heißgas-Schweißen verwendete Werkzeug so betrieben, dass die Temperatur des die Heißgasdüsen verlassenden Gases in einem Bereich von ca. 350°C bis ca. 400°C liegt.

## Patentansprüche

1. Ventilhaube für einen Hubkolben-Verbrennungsmotor, in welche eine Ölabscheidevorrichtung (64, 66, 68, 70) zum Abscheiden von Öltröpfchen aus Blow-by-Gasen des Verbrennungsmotors integriert ist und die eine vom Blow-by-Gas durchströmbare Kammer (A, B) mit einem Gaseinlass (60) und einem Gasauslass bildet, in welcher die Abscheidevorrichtung angeordnet ist, wobei
(a) in die Kammer mindestens eine von der Gasströmung quer anströmbare Prallwand (66, 68, 70) zum Abscheiden von Öltröpfchen aus der Gasströmung und/oder zum Ableiten von abgeschiedenem Öl aus der Gasströmung hineinragt,
(b) die Ventilhaube zwei Außenteile, nämlich ein im Wesentlichen haubenartiges Oberteil (10) und ein im Wesentlichen schalenartiges Unterteil (14), sowie ein zwischen den Außenteilen angeordnetes und im Wesentlichen plattenartiges Zwischenteil (12) aufweist,
(c) das Oberteil (10) und das Zwischenteil (12) zusammen die Kammer (A, B) bilden und das Zwischenteil einen Kammerboden bildet, der mindestens im Bereich der Abscheidevorrichtung bis auf wenigstens eine Ölablauföffnung (34, 36) geschlossen ist,
(d) in das Unterteil (14) mindestens eine einen Wannenboden aufweisende Ölauffangwanne (30, 32) für abgeschiedenes Öl eingeformt ist, welche durch das Zwischenteil (12) abgedeckt ist und über die Ölablauföffnung (34, 36) mit der Kammer (A, B) kommuniziert,
(e) die Außenteile (10, 14) mit von jeweils einem Wandbereich der beiden Außenteile gebildeten Fügeflächen (54, 56) gegeneinander anliegen,
(f) das Zwischenteil (12) auf einem ersten (14) der beiden Außenteile (10, 14) aufliegt und an seinem Umfangsrandbereich mit einer dem zweiten Außenteil (10) zugewandten ersten Fügefläche (50) an eine zweite Fügefläche (52) des zweiten Außenteils angrenzt, eine am ersten Außenteil (14) vorgesehene und dem zweiten Außenteil (10) zugewandte dritte Fügefläche (54) an eine vierte Fügefläche (56) des zweiten Außenteils angrenzt und in einer Draufsicht auf die Ventilhaube die dritte sowie die vierte Fügefläche die erste sowie die zweite Fügefläche (50 bzw. 52) umschließen,
(g) die beiden Außenteile (10, 14) und das Zwischenteil (12) thermoplastische Kunststoffteile sind,
(h) die zweite (52), die dritte (54) und die vierte Fügefläche (56) überdeckende Wandbereiche der beiden Außenteile (10, 14) aus einem für Schweißlaserlicht zumindest im Wesentlichen undurchlässigen Werkstoff bestehen,
(i) die beiden Außenteile (10, 14) und das Zwischenteil (12) in den vier Fügeflächen (50, 52, 54, 56) durch Heißgas-Schweißnähte miteinander verbunden sind, und
(j) alle Schweißnähte ausschließlich in den Fügeflächen (50, 52, 54,56) liegen.

2. Ventilhaube nach Anspruch 1, bei der der Kunststoff eines jeden der Kunststoffteile (10, 12, 14) bis mindestens 130 °C temperaturbeständig ist.

3. Ventilhaube nach Anspruch 1 oder 2, bei der mindestens eines der Kunststoffteile (10, 12, 14) ein Schaumkunststoffteil mit Gasbläschen ist, welche mit einem gegenüber dem geschmolzenen Kunststoff des Kunststoffteils inerten Gas gefüllt sind.

4. Ventilhaube nach Anspruch 3, bei der die Gasbläschen eine Zellengröße von maximal ungefähr 150 µm aufweisen.

5. Ventilhaube nach Anspruch 3 oder 4, bei der das Schaumkunststoffteil ein durch Spritzgießen und gleichzeitiges physikalisches Schäumen einer Kunststoffschmelze erzeugtes Spritzgussteil ist.

6. Verfahren zur Herstellung einer Ventilhaube nach einem der Ansprüche 1 bis 5, bei dem die Außenteile (10, 14) und das Zwischenteil (12) in ihren vier Fügeflächen (50, 52, 54, 56) durch Strahlen eines heißen inerten Gases aufgeschmolzen und sodann zur Bildung der Schweißnähte gegeneinander gepresst werden.

7. Verfahren nach Anspruch 6, bei dem in einem einer zu erzeugenden Schweißnaht entsprechenden Bereich eines Kunststoffteils dessen Kunststoff überall gleichzeitig aufgeschmolzen wird.

8. Verfahren nach Anspruch 6 oder 7, bei dem mindestens eines der Kunststoffteile (10, 12, 14) durch Spritzgießen und gleichzeitiges physikalisches Schäumen einer Kunststoffschmelze erzeugt wird.

## Claims

1. Valve cover for a reciprocating internal combustion engine, in which an oil separation device (64, 66, 68, 70) for separating oil droplets from blow-by gases of the internal combustion engine is integrated, and which forms a chamber (A, B) through which the blow-by gas can flow, the chamber having a gas inlet (60) and a gas outlet, and the separation device being arranged in the chamber, wherein
(a) at least one impact wall (66, 68, 70), against which the flow of gas can flow transversely, for separating oil droplets from the flow of gas and/or for diverting separated oil from the flow of gas, projects into the chamber,
(b) the valve cover comprises two outer parts, namely an essentially hood-like upper part (10) and an essentially dish-like lower part (14), and also an essentially plate-like intermediate part (12) arranged between the outer parts,
(c) the upper part (10) and the intermediate part (12) together form the chamber (A, B), and the intermediate part forms a chamber bottom, which is closed at least in the area of the separation device except for at least one oil outlet opening (34, 36),
(d) at least one oil collection pan (30, 32) for separated oil, having a pan bottom, is formed in the lower part (14), the oil collection pan being covered by the intermediate part (12) and communicating with the chamber (A, B) via the oil outlet opening (34, 36),
(e) the outer parts (10, 14) lie against each other with joining surfaces (54, 56), each formed by a wall area of the two outer parts,
(f) the intermediate part (12) rests on a first (14) of the two outer parts (10, 14) and at its circumferential edge area abuts with a first joining surface (50) facing the second outer part (10) on a second joining surface (52) of the second outer part, a third joining surface (54) provided on the first outer part (14) and facing the second outer part (10) abuts on a fourth joining surface (56) of the second outer part, and, in a plan view of the valve cover, the third and the fourth joining surfaces enclose the first and the second joining surfaces (50 and 52, respectively),
(g) the two outer parts (10, 14) and the intermediate part (12) are thermoplastic parts,
(h) wall areas of the two outer parts (10, 14) covering the second (52), the third (54) and the fourth joining surface (56) consist of a material which is at least substantially impermeable to welding laser light,
(i) the two outer parts (10, 14) and the intermediate part (12) are joined to one another in the four joining surfaces (50, 52, 54, 56) by hot gas-weld seams, and
(j) all of the weld seams lie exclusively in the joining surfaces (50, 52, 54, 56).

2. Valve cover in accordance with claim 1, wherein the plastic of each of the plastic parts (10, 12, 14) is temperature-resistant up to at least 130° C.

3. Valve cover in accordance with claim 1 or 2, wherein at least one of the plastic parts (10, 12, 14) is a foam plastic part with gas bubbles, which are filled with a gas which is inert in relation to the molten plastic of the plastic part.

4. Valve cover in accordance with claim 3, wherein the gas bubbles have a cell size of at most approximately 150 µm.

5. Valve cover in accordance with claim 3 or 4, wherein the foam plastic part is an injection molded part produced by injection molding and simultaneous physical foaming of a plastic melt.

6. Method for the manufacture of a valve cover in accordance with any one of claims 1 to 5, wherein the outer parts (10, 14) and the intermediate part (12) are melted in their four joining surfaces (50, 52, 54, 56) by jets of a hot inert gas and are then pressed against one another in order to form the weld seams.

7. Method in accordance with claim 6, wherein in an area of a plastic part corresponding to a weld seam to be produced, its plastic is melted throughout simultaneously.

8. Method in accordance with claim 6 or 7, wherein at least one of the plastic parts (10, 12, 14) is produced by injection molding and simultaneous physical foaming of a plastic melt.

## Revendications

1. Chapeau de soupape pour un moteur à combustion interne à pistons alternatifs, dans lequel un dispositif de séparation d'huile (64, 66, 68, 70) servant à séparer des gouttes d'huile des gaz de fuite du moteur à combustion interne est intégré et qui forme une chambre (A, B) pouvant être traversée par un gaz de fuite, pourvue d'une arrivée de gaz (60) et d'une sortie de gaz, dans laquelle est disposé le dispositif de séparation,
(a) au moins une paroi d'impact (66, 68, 70) pouvant être longée de manière transversale par le flux de gaz, servant à séparer des gouttes d'huile du flux de gaz et/ou servant à dévier l'huile séparée du flux de gaz dépassant dans la chambre,
(b) le chapeau de soupape présentant deux parties extérieures, à savoir une partie supérieure (10) essentiellement de type chapeau et une partie inférieure (14) essentiellement de type coque, ainsi qu'une partie intermédiaire (12) disposée entre les parties extérieures et essentiellement de type panneau,
(c) la partie supérieure (10) et la partie intermédiaire (12) formant conjointement la chambre (A, B) et la partie intermédiaire formant un fond de chambre, qui est fermé au moins dans la zone du dispositif de séparation jusqu'à au moins une ouverture d'évacuation d'huile (34, 36) ;
(d) au moins une cuve de collecte d'huile (30, 32) présentant un fond de cuve, pour l'huile séparée étant formée dans la partie inférieure (14), laquelle est couverte par la partie intermédiaire (12) et communique avec la chambre (A, B) par l'intermédiaire de l'ouverture d'évacuation d'huile (34, 36) ;
(e) les parties extérieures (10, 14) reposant l'une contre l'autre par des surfaces de jonction (54, 56) formées par respectivement une zone de paroi des deux parties extérieures ;
(f) la partie intermédiaire (12) reposant sur une première (14) des deux parties extérieures (10, 14) et jouxtant, au niveau de sa zone de bord périphérique, par une première surface de jonction (50) tournée vers la deuxième partie extérieure (10), une deuxième surface de jonction (52) de la deuxième partie extérieure, une troisième surface de jonction (54) prévue au niveau de la première partie extérieure (14) et tournée vers la deuxième partie extérieure (10) jouxtant une quatrième surface de jonction (56) de la deuxième partie extérieure, et, dans une coupe vue d'en haut du chapeau de soupape, la troisième ainsi que la quatrième surface de jonction renfermant la première ainsi que la deuxième surface de jonction (50 ou 52) ;
(g) les deux parties extérieures (10, 14) et la partie intermédiaire (12) étant des parties synthétiques thermo-plastiques ;
(h) des zones de paroi, recouvrant la deuxième (52), la troisième (54) et la quatrième (56) surface de jonction, des deux parties extérieures (10, 14) étant constituées d'un matériau au moins essentiellement imperméable à la lumière laser de soudage ;
(i) les deux parties extérieures (10, 14) et la partie intermédiaire (12) étant reliées les unes aux autres dans les quatre surfaces de jonction (50, 52, 54, 56) par des cordons de soudure au gaz chaud, et
(j) tous les cordons de soudure se trouvant exclusivement dans les surfaces de jonction (50, 52, 54, 56).

2. Chapeau de soupape selon la revendication 1, dans le cadre duquel la matière synthétique de chacune des parties synthétiques (10, 12, 14) est résistante à des températures allant au moins jusqu'à 130°C.

3. Chapeau de soupape selon la revendication 1 ou 2, dans le cadre duquel au moins une des parties synthétiques (10, 12, 14) est une partie synthétique en mousse comprenant des bulles de gaz, qui sont remplies d'un gaz inerte par rapport à la matière synthétique fondue de la partie synthétique.

4. Chapeau de soupape selon la revendication 3, dans le cadre duquel les bulles de gaz présentent une grandeur de cellule d'environ 150 µm au maximum.

5. Chapeau de soupape selon la revendication 3 ou 4, dans le cadre duquel la partie synthétique en mousse est une partie moulée par injection produite par un moulage par injection et, dans le même temps, par un moussage physique d'une matière fondue synthétique.

6. Procédé servant à fabriquer un chapeau de soupape selon l'une quelconque des revendications 1 à 5, dans le cadre duquel les parties extérieures (10, 14) et la partie intermédiaire (12) sont fondues, dans leurs quatre surfaces de jonction (50, 52, 54, 56), par rayonnement d'un gaz chaud inerte puis sont pressées les unes contre les autres afin de former des cordons de soudure.

7. Procédé selon la revendication 6, dans le cadre duquel la matière synthétique de la partie synthétique est fondue partout dans le même temps dans une zone de cette dernière correspondant à un cordon de soudure à produire.

8. Procédé selon la revendication 6 ou 7, dans le cadre duquel au moins une des parties synthétiques (10, 12, 14) est produite par un moulage par injection et, dans le même temps, par un moussage physique d'une matière fondue synthétique.
